# EUROPEAN PATENT SPECIFICATION

(11) **EP 0 532 132 B1**
(45) Date of publication and mention of the grant of the patent: **31.05.1995**
(21) Application number: 92203609.0
(22) Date of filing: 23.01.1989
(51) Int. Cl.: B23Q 9/00, B25H 1/04

(54) **Foldable stand for threading machines**
Zusammenlegbare Unterstützung für Gewindeschneidmaschinen
Appui pliable pour une filière

(30) Priority: 29.01.1988 US 150394
(43) Date of publication of application: 17.03.1993
(62) Divisional of application: 89630014.2
(73) Proprietor: EMERSON ELECTRIC CO., St. Louis Missouri 63136 (US)
(72) Inventor: Gress, Paul William, Bay Village, Ohio 44140 (US); Jansen, John Herman, Bay Village, Ohio 44140 (US)
(74) Representative: Weydert, Robert

(56) References cited:
- DE-A- 326 494
- DE-A- 2 045 928
- GB-A- 323 055
- GB-A- 2 051 690

## Description

### Background of the Invention

This invention relates to the art of stands for metalworking machine and, more particularly, to a foldable stand for a power driven threading machine.

The use of portable power driven pipe and rod threading machines to facilitate the on site preparation of threaded pipe and rod is of course well known, and it is likewise well known to provide a stand to support such a machine during metalworking operations. Certain such stands heretofore provided have included four ground or floor engaging legs while others have included a pair of such legs and a pair of wheels which facilitates lifting one end of the stand for the stand and the machine mounted thereon to be supported by the wheels for movement from one location to another along an underlying support surface such as a floor or ground

In GB-A-2 051 690 there is disclosed a folding stand as defined in the precharacterizing portion of independent claim 1. This known folding stand is adapted for transporting an article, for example, from a vehicle into a building and for elevating the article to facilitate unloading.

While stands of the foregoing character adequately serve to support a threading machine during operation thereof and provide a degree of portability with respect to the machine, a problem encountered in connection with pipe threading machine stands heretofore provided is the susceptibility thereof to tilting about an axis transverse to the machine axis under certain work loading conditions. In this respect, such machines are capable of threading one end of an elongated pipe or rod which can extend a considerable distance beyond the end of the machine opposite the end at which threading takes place. Accordingly, if the length of the workpiece extending from the machine is too long, the weight thereof, unless separately supported, will tilt the machine relative to the underlying surface. Therefore, either a separate workpiece supporting stand is required to preclude such tilting, or operation of the machine must be limited to predetermined lengths of workpieces. Even in connection with the latter, it will be appreciated that if the workman accidentally tries to thread a workpiece which is too long, the stand and machine may tilt in the foregoing manner. Any such tilting endangers the workman and is potentially damaging to the machine.

Another problem encountered in connection with such stands heretofore provided is that storage of the stand and machine mounted thereon consumes considerable floor space. Even if the stand is foldable, the latter and the machine mounted thereon are in a horizontal disposition when stored and, thus, require a floor area for storage at least equal to the area of the stand and machine during use. In connection with a foldable stand, the latter may require a greater floor area for storage when folded than when unfolded.

### Summary of the Invention

The object of the invention is to provide a foldable stand of the foregoing character which, when unfolded to support the machine in a use position, is adapted to restrain tilting of the stand and machine about the wheel axis during a metalworking operation; and which, when folded, provides for storage of the stand and machine in an inclined disposition relative to an underlying support surface.

According to the invention, to achieve this, there is provided a folding stand for supporting, transporting and storing a power driven threading machine relative to an underlying surface comprising first support means for supporting said machine, said first support means having longitudinally opposite ends, second support means, means interconnecting said first and second support means for relative displacement between unfolded and folded positions in which said first support means is respectively elevated and lowered relative to said underlying surface, said second support means including wheel means below one of said opposite ends of said first support means when said second support means is in said unfolded position, said wheel means in said unfolded position engaging said underlying surface, characterized in that said second support means has projection means below said one end of said first support means when said second support means is in said unfolded position, said projection means in said unfolded position being spaced above and generally parallel to said underlying surface and outwardly of said one end beyond said wheel means and below the axis thereof to restrain pivoting of said stand about said axis of said wheel means in the direction outwardly of said one end, said wheel means and projection means in said folded position of said second support means providing for said stand to be pivoted upwardly relative to said underlying surface and about the axis of said wheel means to an inclined position at an angle less than 90° relative to said underlying surface, said wheel means and projection means in said inclined position engaging said underlying surface to provide an inclined storage position for said stand and a machine thereon.

Thus, it can be seen that the projection means are positionally related relative to the wheels of the stand so as to restrain tipping of the machine and stand about the wheel axis during use of the machine and so as to cooperate with the wheels when the stand is folded to engage the underlying support surface to facilitate storage of the stand and machine in an inclined disposition relative to the underlying surface.

Advantageous embodiments of the folding stand are defined in the dependent claims.

### Brief Description of the Drawings

The foregoing features, and others, will in part be obvious and in part pointed out more fully hereinafter in conjunction with the written description of a preferred embodiment of the invention illustrated in the accompanying drawings in which:
FIGURE 1 is an exploded perspective view of the upper and lower support portions of a foldable stand in accordance with the present invention;
FIGURE 2 is a side elevation view of the stand in its unfolded position and showing a power driven threading machine mounted on the upper support portion;
FIGURE 3 is a side elevation view of the stand and threading machine in the folded position of the stand; and,
FIGURE 4 is a side elevation view of the folded stand and threading machine in the storage position thereof.

### Description of a Preferred Embodiment

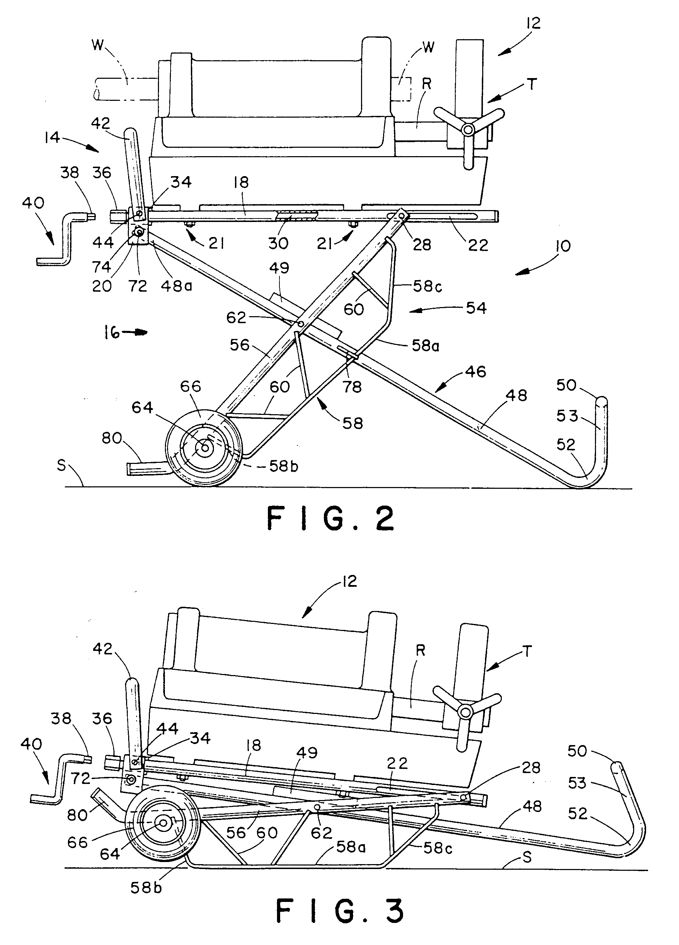

With reference now in greater detail to the drawings wherein the showings are for the purpose of illustrating a preferred embodiment of the invention only and are not for the purpose of limiting the invention, there is illustrated a foldable cart 10 for a power driven threading machine 12. Stand 10 is comprised of a first or upper support portion 14 and a second or lower support portion 16, which support portions are structured and interconnected as more fully described hereinafter for the stand to be unfolded to facilitate supporting machine 12 in a use position relative to an underlying surface S, as shown in FIGURE 2, and for the stand to be folded to the position shown in FIGURE 3 in which the stand facilitates the transportation and storage of the machine. The structure and operation of threading machine 12 is not important to the present invention and, as is well known in the threading machine art, the threading machine is adapted to receive a workpiece W and to rotate the workpiece relative to tooling T which is axially displaceable along rails R relative to the adjacent end of workpiece W so as to enable the performing of work thereon, such as cutting, reaming and/or threading of the workpiece end. As is further well known in connection with such threading machines, workpiece W extends through a machine spindle which is driven by a suitable motor and transmission mechanism within the machine housing. In connection with the embodiment of the stand disclosed herein, the threading machine has a length of about 84 cm (33 inches), a height of about 48 cm (19 inches), a width of about 40 cm (16 inches), and weighs between 72 and 95 kg (160 and 210 pounds).

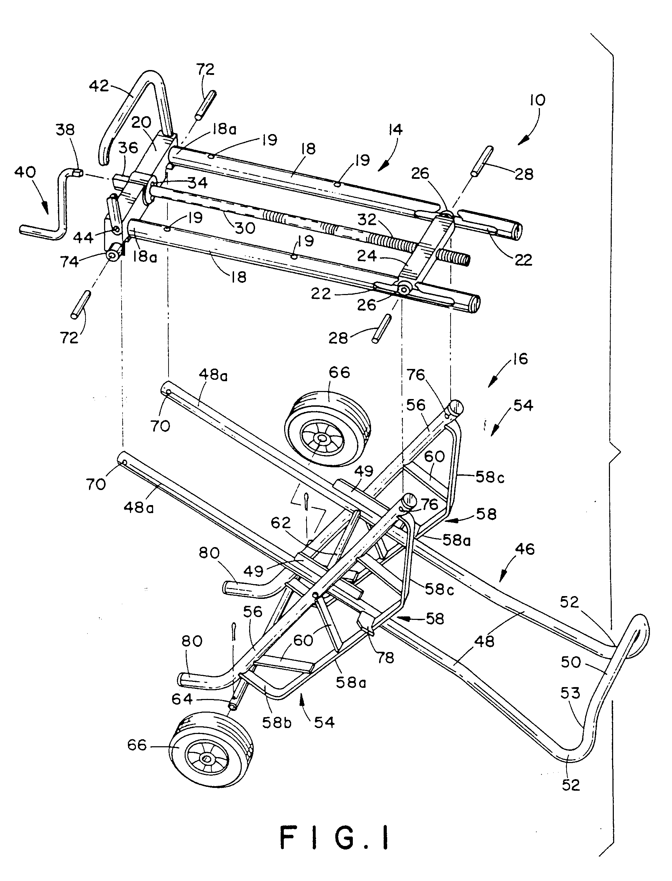

Upper support portion 14 is comprised of a pair of longitudinally extending, parallel, tubular metal side rail members 18 having ends 18a laterally spaced apart and inter-connected by a cross member 20 which, for the latter purpose, may be provided with openings axially receiving the side rail ends. The opposite end of each of the side rails 18 is provided with a longitudinally extending slot 22 extending horizontally through the inner and outer side portions thereof. As will be appreciated from the broken away portions of the side rails in FIGURE 1, a yoke member 24 extends laterally between the side rails and is provided at its opposite ends with rollers 26 each of which is disposed inside the corresponding tubular side rail for rolling movement therealong. Rollers 26 are mounted on yoke 24 by means of pins 28 which extend through the corresponding slot 22 and into the yoke member 24 and have outer ends interconnected with lower support portion 16 as explained more fully hereinafter.

Rollers 26 support yoke member 24 for longitudinal displacement relative to side rails 18 between the opposite ends of slots 22, and such longitudinal displacement is achieved by means of a jackscrew arrangement including a shaft 30 having a threaded portion 32 extending through a cooperatively threaded opening in yoke member 24. The opposite end of shaft 30 extends through an opening therefor in cross member 20 and which opening supports the shaft for rotation about its axis. Shaft 30 is restrained against axial displacement relative to cross member 20 by means of a pin 34 extending through the shaft on the inner side of cross member 20 and an enlargement 36 on the outer end of the shaft which engages the outer side of cross member 20. Enlargement 36 is provided with a non-circular opening, not shown, which is adapted to receive the correspondingly contoured end 38 of a crank member 40 by which shaft 30 is adapted to be rotated in opposite directions about its axis. It will be appreciated from the foregoing description that rotation of the shaft in opposite directions about its axis results in longitudinal displacement of yoke member 24 toward and away from cross member 20. Such longitudinal displacement of yoke member 24 operates to fold and unfold cart 10 as will become apparent hereinafter.

Upper support portion 14 further includes an inverted U-shaped tubular metal handle member 42 mounted on cross member 20 for the purpose set forth hereinafter. Handle 42 can be mounted on the cross member in any suitable manner and, in the embodiment illustrated, is secured to the opposite ends of the cross member by means threaded fasteners 44 extending laterally into the cross member as will be appreciated from the showing of one such fastener in FIGURE 1. Further, it will be appreciated that the openings in cross member 20 for ends 18a of the side rails can be vertically aligned with the lower ends of the legs of handle 42, whereby fasteners 44 can extend sufficiently into the cross member to extend through openings therefore in rail ends 18a to secure the rails against separation from cross member 20. As will be appreciated from FIGURES 1 and 2, side rails 18 of upper support portion 14 are provided with openings 19 therethrough which facilitate the mounting of threading machine 12 thereon such as by means of threaded fastener assemblies 21 extending through mounting feet 23 on the machine housing.

Lower support portion 16 includes one piece U-shaped tubular metal leg and handle component 46. More particularly, leg and handle component 46 is comprised of laterally spaced apart parallel legs 48 and a handle therebetween defined by a portion 50 and transition portions 52 and 53 between each leg 48 and the corresponding end of portion 50. Portion 50 is transverse to and offset from legs 48, and transition portions 52 are arcuate and engage the underlying support surface S when the stand is unfolded to support machine 12 in its use position as shown in FIGURE 2. Transition portions 53 are straight and provide hand grip areas for the purpose set forth hereinafter.

Lower support portion 16 further includes a pair of leg units 54 each laterally outwardly adjacent one of the legs 48 of leg and handle component 46. Each leg unit is comprised of a tubular metal leg member 56 and a skid rail which, in the embodiment shown, is provided by a metal skid strip 58 having an elongate planar intermediate portion 58a spaced from leg 56 and opposite ends 58b and 58c extending toward, and secured to leg 56 such as by welding. Intermediate portion 58a is braced relative to leg 56 by bracing strips 60 spaced apart between the opposite ends of the skid strip and welded to the latter and to leg 56. Leg units 54 are pivotally interconnected with leg and handle component 46 by means of a pivot rod 62 extending through openings therefor in legs 48 and 56 and having its opposite ends suitably secured against axial displacement from the leg members such as by cotter pins not shown. Preferably, legs 48 are reinforced in the areas thereof provided with the openings for pivot rod 62 by means of longitudinally extending plates 49 welded to the legs. The lower ends of legs 56 with respect to the positions thereof shown in FIGURES 1 and 2 are laterally interconnected by an axle rod 64 suitably secured thereto such as by welding, and the outer ends of rod 64 receive wheels 66 which engage underlying support surface S when the stand is in its unfolded position as shown in FIGURE 2 of the drawing.

As will be appreciated from FIGURES 1 and 2 of the drawing, the underside of cross member 20 of upper support portion 14 is provided adjacent its opposite ends with slots 68 which receive the upper ends 48a of legs 48 of the handle and leg component 46. Ends 48a are provided with openings 70 therethrough and are pivotally interconnected with cross member 20 by means of corresponding pins 72 which extend through support sleeves 74 in the opposite ends of cross member 20 and thence through openings 70 and into corresponding openings in the cross member laterally inwardly of slots 68. The upper ends of leg members 56 of leg units 54 are provided with openings 76 therethrough and are positioned laterally outwardly adjacent the corresponding one of the rollers 26 on upper support portion 14 so as to be pivotally interconnected with yoke member 24 and thus upper support portion 14 by means of the pins 28 which extend through openings 76 and rollers 26 into corresponding openings therefor in yoke member 24.

For the purpose set forth hereinafter, each of the leg members 48 of leg and handle unit 46 is provided with a positioning tab 78 which is welded or otherwise secured to the leg to extend outwardly across the corresponding skid strip 58 and thence downwardly along the outer edge thereof. Likewise for the purpose set forth hereinafter, the lower ends of leg members 56 of leg units 54 extend beyond wheel axle 64 and are bent relative to the axis of the corresponding leg 56 to provide extended portions 80 which project outwardly beyond the outer surface of wheels 66.

It is believed that the following description of the operation of stand 10 with respect to the folding and unfolding thereof, and the functions of the stand in each of the folded and unfolded positions, will be readily understood from the foregoing description of the structural components of the stand and the structural interrelationships therebetween. In this respect, and presuming the component parts to be in the positions shown in FIGURE 2 of the drawing in which the stand is in its erected or unfolded position, the introduction of end 38 of crank 40 into the opening therefor in enlarged end 36 of shaft 30 and the manual rotation of the shaft in one direction about its axis operates to move yoke member 24 to the right in FIGURES 1 and 2 of the drawing, whereby rollers 26 displace pins 28 and thus the upper ends of legs 56 to the right along slots 22. It will be appreciated that such displacement of pins 28 results in relative pivotal displacement between leg units 56 and leg and handle component 46 clockwise and counterclockwise, respectively, relative to pivot rod 62. Such relative pivotal displacement is facilitated by wheels 56 being in rolling engagement with the underlying support surface S, and continued rotation of crank 40 in the direction to produce such displacement ultimately results in stand 10 reaching the folded position illustrated in FIGURE 3 of the drawing. Preferably, intermediate portions 58a of skid strips 58 on leg units 54 are spaced from leg members 56 of the latter such that when the skid strip portions engage surface S in the folded position wheels 66 are sightly spaced above surface S. This relative positioning is for the purpose set forth hereinafter.

When the stand is in its retracted or folded position shown in FIGURE 3, it will be appreciated that a workman can grasp handle portion 50 of the leg and handle component 46 and pull upwardly to pivot the stand and threading machine upwardly relative to the axis of wheel axle 64 to an inclined position. In this inclined position, the stand and threading machine are supported by wheels 66 and the workman can then grasp handle portions 53 and/or 50 and wheel the stand and machine from one location to another along surface S. Furthermore, with the folded stand in the inclined position, it will be appreciated that intermediate skid strip portions 58a advantageously provide for sliding the stand and threading machine upwardly or downwardly along a stairway, or upwardly or downwardly relative to an elevated edge such as that which would be defined by the end edge of a truck bed or the edge of a loading or unloading platform. It will be further appreciated that such displacement along a stairway and sliding displacement along the truck bed or loading platform surface can be achieved without wheels 66 interfering with sliding of the stand in that the wheels are spaced above the plane of skid strip portions 58a as described above. Such sliding of the folded stand and threading machine on the skid strips can be accomplished by pulling the stand through the use of handle portions 50 and 53 of leg and handle component 46. Further, handle 42 on cross member 20 at the opposite end of the stand can also be used in connection with such sliding displacement of the stand. Moreover, handle 42 and handle portions 50 and 53 facilitate two workmen picking up the stand and machine and carrying the latter. Accordingly, loading or unloading of the stand and threading machine relative to a truck bed or elevated platform is facilitated as is the transporting of the stand and threading machine along an underlying support surface and into any location of use which requires elevating or lowering of the stand and threading machine in an inclined disposition.

When the stand and threading machine are in the position shown in FIGURE 3, rotation of crank 40 in the direction opposite that by which folding is achieved results in displacement of yoke member 26 toward cross member 20 and, thus, displacement of rollers 26 and pins 28 in the corresponding direction. Upon such displacement, leg units 56 and leg and handle component 46 pivot relative to one another about pivot rods 62 to move the stand and machine from the position shown in FIGURE 3 toward the position shown in FIGURE 2. Advantageously in connection with the jackscrew arrangement for achieving such displacement of yoke member 24 and the leg units and leg and handle component, threading machine 12 can be elevated to any desired position above underlying support surface S up to the position shown in FIGURE 2 so as to provide a working position most suitable for a given workman. In connection with such adjustable positioning of the threading machine, positioning tabs 78 on legs 48 of leg and handle component 46 are adapted to engage the corresponding skid strip portion 58a during such unfolding and elevating of the threading machine to limit unfolding movement and thus define the uppermost position of the stand. In the latter position of the stand, tabs 78 not only determine such position but also interengage with the skid strips so as to add stability to the stand in the fully extended position thereof.

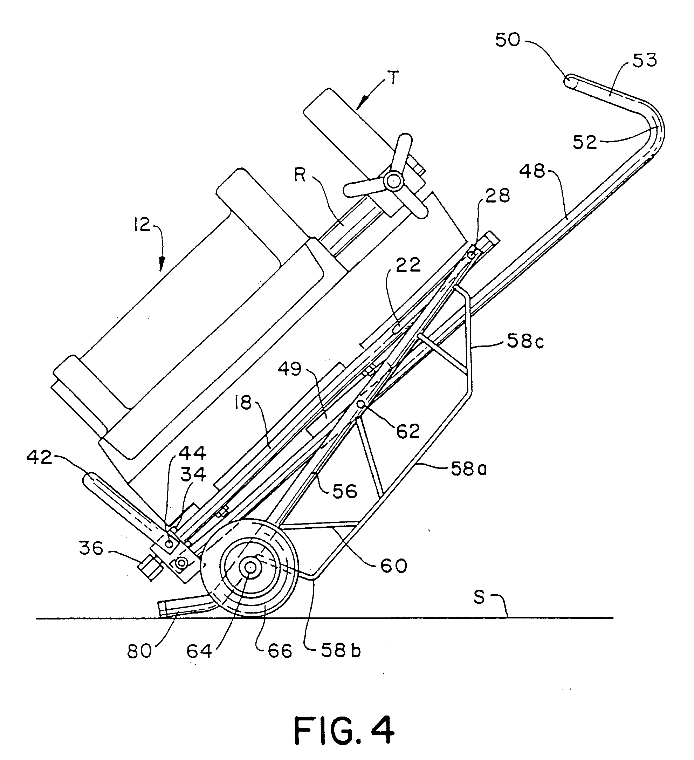

As will be appreciated from FIGURE 2, when stand 10 is in the unfolded position, projections 80 extend from wheels 66 in the rearward direction with respect to the working end of threading machine 12 and are closely spaced and generally parallel to underlying surface S. Accordingly, should a workman introduce a workpiece W into the threading machine which would extend to the left from the machine as seen in FIGURE 2 to such an extent that the weight of the workpiece would tend to tilt the stand and threading machine counterclockwise relative to the axis of wheel axle 64, projections 80 will engage the underlying surface S to restrain such tilting displacement and thus avoid the potential damage to the machine and/or injury to a workman which could occur if such tilting were not so restrained. Projections 80 also serve the useful purpose of cooperating with wheels 66 to support the folded stand with machine 12 thereon in an inclined disposition relative to a horizontal underlying surface S. In this respect, when the stand is folded and then pivoted to an inclined disposition as described hereinabove to facilitate rolling movement of the stand and machine relative to surface S, the stand can be further tilted or inclined for projections 80 to engage surface S together with wheels 66 as shown in Fig. 4. In such disposition of the stand and machine, the assembly is inclined sufficiently for the center gravity thereof to be in a location between wheel axle 64 and the outermost ends of projections 80, whereby the stand and machine can be stored in the inclined position at less than 90° relative to the underlying surfaces. This facilitates the conservation of storage space as well as facilitating the manipulation of the stand from the storage position to the inclined position for rolling movement along the underlying support surface.

## Claims

1. Folding stand for supporting, transporting and storing a power driven threading machine (12) relative to an underlying surface (S) comprising first support means (14) for supporting said machine (12), said first support means (14) having longitudinally opposite ends, second support means (16), means (62) interconnecting said first and second support means (14, 16) for relative displacement between unfolded and folded positions in which said first support means (14) is respectively elevated and lowered relative to said underlying surface (S), said second support means (16) including wheel means (66) below one of said opposite ends of said first support means (14) when said second support means (16) is in said unfolded position, said wheel means (66) in said unfolded position engaging said underlying surface (S), characterized in that said second support means (16) has projection means (80) below said one end of said first support means (14) when said second support means (16) is in said unfolded position, said projection means (80) in said unfolded position being spaced above and generally parallel to said underlying surface (S) and outwardly of said one end beyond said wheel means (66) and below the axis thereof to restrain pivoting of said stand (10) about said axis of said wheel means (66) in the direction outwardly of said one end, said wheel means (66) and projection means (80) in said folded position of said second support means (16) providing for said stand (10) to be pivoted upwardly relative to said underlying surface (S) and about the axis of said wheel means (66) to an inclined position at an angle less than 90° relative to said underlying surface (S), said wheel means (66) and projection means (80) in said inclined position engaging said underlying surface (S) to provide an inclined storage position for said stand (10) and a machine (12) thereon.

2. Stand according to claim 1, characterized in that said means interconnecting said first and second support means (14, 16) includes means for adjusting said relative displacement to selectively vary said unfolded position and thus the elevation of said first support means (14) relative to said underlying surface (S).

3. Stand according to claim 2, characterized in that said support second means (16) includes means (78, 58) to limit the uppermost elevation of said first support means (14) relative to said underlying surface (S).

4. Stand according to claim 1, characterized in that said second support means (16) includes handle means (50) adjacent the other of said opposite ends of said first support means (14) when said second support means (16) is in said folded position.

5. Stand according to claim 4, characterized in that said wheel means (66) and said handle means (50) engage said underlying surface (S) when said second support means (16) is in said unfolded position.

## Patentansprüche

1. Klappgestell zum Tragen, Transportieren und Aufbewahren einer mit Motorantrieb versehenen Gewindeschneidmaschine (12) relativ zu einer darunter gelegenen Oberfläche (S), mit einer ersten Trageinrichtung (14) zum Tragen der Maschine (12), wobei die erste Trageinrichtung (14) longitudinal entgegengesetzte Enden hat, einer zweiten Trageinrichtung (16), einer Einrichtung (62), die die erste und zweite Trageinrichtung (14, 16) zur Relativverlagerung zwischen zusammen- und aufgeklappten Positionen, in welchen die erste Trageinrichtung (14) relativ zu der darunter gelegenen Oberfläche (S) angehoben bzw. abgesenkt ist, miteinander verbindet, wobei die zweite Trageinrichtung (16) eine Radeinrichtung (66) aufweist, die unterhalb von einem der entgegengesetzten Enden der ersten Trageinrichtung (14) ist, wenn die zweite Trageinrichtung (16) in der aufgeklappten Position ist, wobei die Radeinrichtung (66) in der aufgeklappten Position die darunter gelegene Oberfläche (S) berührt, dadurch gekennzeichnet, daß die zweite Trageinrichtung (16) eine Vorsprungseinrichtung (80) hat, die unterhalb des einen Endes der ersten Trageinrichtung (14) ist, wenn die zweite Trageinrichtung (16) in der aufgeklappten Position ist, wobei die Vorsprungseinrichtung (80) in der aufgeklappten Position mit Abstand oberhalb von und insgesamt parallel zu der darunter gelegenen Oberfläche (S) und außerhalb von dem einen Ende jenseits der Radeinrichtung (66) und unterhalb der Achse derselben ist, um ein Schwenken des Gestells (10) um die Achse der Radeinrichtung (66) in der Richtung von dem einen Ende nach außen zu verhindern, wobei die Radeinrichtung (66) und die Vorsprungseinrichtung (80) in der zusammengeklappten Position der zweiten Trageinrichtung (16) dafür sorgen, daß das Gestell (10) relativ zu der darunter gelegenen Oberfläche (S) und um die Achse der Radeinrichtung (66) in eine geneigte Position mit einem Winkel von weniger als 90° relativ zu der darunter gelegenen Oberfläche (S) nach oben geschwenkt werden kann, und wobei die Radeinrichtung (66) und die Vor-sprungseinrichtung (80) in der geneigten Position die darunter gelegene Oberfläche (S) berühren, um eine geneigte Aufbewahrungsposition für das Gestell (10) und eine darauf befindliche Maschine (12) zu schaffen.

2. Gestell nach Anspruch 1, dadurch gekennzeichnet, daß die Einrichtung, die die 'erste und zweite Trageinrichtung (14, 16) miteinanderverbindet, eine Einrichtung aufweist zum Einstellen der Relativverlagerung zum wahlweisen Verändern der aufgeklappten Position und somit der Höhe der ersten Trageinrichtung (14) relativ zu der darunter gelegenen Oberfläche (S).

3. Gestell nach Anspruch 2, dadurch gekennzeichnet, daß die zweite Trageinrichtung (16) eine Einrichtung (78, 58) zum Begrenzen der obersten Höhe der ersten Trageinrichtung (14) relativ zu der darunter gelegenen Oberfläche (S) aufweist.

4. Gestell nach Anspruch 1, dadurch gekennzeichnet, daß die zweite Trageinrichtung (16) eine Griffeinrichtung (50) aufweist, die dem anderen der entgegengesetzten Enden der ersten Trageinrichtung (14) benachbart ist, wenn die zweite Trageinrichtung (16) in der zusammengeklappten Position ist.

5. Gestell nach Anspruch 4, dadurch gekennzeichnet, daß die Radeinrichtung (60) und die Griffeinrichtung (50) die darunter gelegene Oberfläche (S) berühren, wenn die zweite Trageinrichtung (16) in der aufgeklappten Position ist.

## Revendications

1. Chariot support pliant pour supporter, transporter et stocker une machine à fileter motorisée (12) par rapport à une surface sous-jacente (S), comprenant un premier moyen formant support (14) pour supporter la machine (12), ce premier moyen formant support (14) ayant des extrémités opposées dans le sens longitudinal, un second moyen formant support (16), un moyen (62) interconnectant les premier et second moyens formant supports (14,16) pour permettre un déplacement relatif entre des positions pliée et dépliée dans lesquelles le premier moyen formant support (14) est respectivement élevé et abaissé par rapport à la surface sous-jacente (S), le second moyen formant support (16) comportant un moyen à roues (66) situé en dessous d'une première extrémité parmi les extrémités opposées du premier moyen formant support (14) lorsque le second moyen formant support se trouve dans la position déplièe, ce moyen à roues (66) étant en contact, dans la position dépliée, avec la surface sous-jacente (S), caractérisé en ce que le second moyen formant support (16) comporte un moyen formant une saillie (80) situé en dessous de la première extrémité du premier moyen formant support (14), lorsque le second moyen formant support (16) se trouve dans la position dépliée, ce moyen formant une saillie (80) étant espacé, dans la position dépliée, au-dessus de la surface sous-jacente (S), en étant d'une manière générale parallèle à cette surface, et étant situé à l'extérieur de la première extrémité, au-delà du moyen à roues (66) et en dessous de l'axe de ce moyen, afin de restreindre le pivotement du chariot support (10) autour de l'axe du moyen à roues (66) dans la direction allant vers l'extérieur de la première extrémité, le moyen à roues (66) et le moyen formant une saillie (80) permettant au chariot support (10), dans la position pliée du second moyen formant support (16), de pivoter vers le haut, par rapport à la surface sous-jacente (S) et autour de l'axe du moyen à roues (66), jusqu'à une position inclinée d'un angle inférieur à 90° par rapport à la surface sous-jacente (S), le moyen à roues (66) et le moyen formant une saillie (80) venant en contact, dans cette position inclinée, avec la surface sous-jacente, de manière à fournir une position de stockage inclinée pour le chariot support (10) et pour une machine (12) montée sur celui-ci.

2. Chariot support suivant la revendication 1 caractérisé en ce que le moyen interconnectant les premier et second moyens formant supports (14,16) comporte un moyen pour ajuster le déplacement relatif de manière à faire varier sélectivement la position dépliée et par conséquent l'élévation du premier moyen formant support (14) par rapport à la surface sous-jacente(S).

3. Chariot support suivant la revendication 2 caractérisé en ce que le second moyen formant support (16) comporte des moyens (78,58) pour limiter l'élévation la plus haute du premier moyen formant support (14) par rapport à la surface sous-jacente (S).

4. Chariot support suivant la revendication 1 caractérisé en ce que le second moyen formant support (16) comporte une poignée (50) adjacente à la seconde extrémité du premier moyen formant support (14) lorsque le second moyen formant support (16) se trouve dans la position pliée.

5. Chariot support suivant la revendication 4 caractérisé en ce que le moyen à roues (66) et la poignée (50) sont en contact avec la surface sous-jacente (S) lorsque le second moyen formant support (16) se trouve dans la position dépliée.
